# EUROPÄISCHE PATENTANMELDUNG

(11) **EP 2 058 120 A1**
(43) Veröffentlichungstag der Anmeldung: **13.05.2009**
(21) Anmeldenummer: 09001003.4
(22) Anmeldetag: 09.05.2001
(51) Int. Cl.: B32B 27/08, F16L 59/00, E04B 1/80, B32B 27/16, F16L 59/02

(54) **Folienlaminate als Hochbarrierefolien und deren Verwendung in Vakuumisolierpaneelen**

(30) Priorität: 22.05.2000 DE 10025321
(62) Teilanmeldung aus: 04022467.7
(71) Anmelder: Wipak Walsrode GmbH & Co. KG, 29656 Walsrode (DE)
(72) Erfinder: Jacobsen, Sven, Dr.,, 29683 Fallingbostel (DE); Kuckertz, Christian, Dr.,, 57462 Olpe (DE); Brandt, Rainer, Dr.,, 29664 Walsrode (DE)
(74) Vertreter: Kutzenberger, Helga

(57) **Zusammenfassung**

Ebenfalls beschrieben wird deren Verwendung als Hochbarrierefolie in Vakuumisolierpaneelen.

## Beschreibung

Die vorliegende Erfindung betrifft Folienlaminate die als Hochbarrierefolien besonders gasdiffusionsdicht sind und die Verwendung dieser gasdiffusionsdichten Folienlaminate in der Herstellung von Vakuum Isolations Paneelen.

In einigen speziellen technischen Produkten wie zum Beispiel in der Herstellung von Vakuum Isolations Paneelen (VIP) sind Folien erforderlich, die äußerst geringe Gasdiffusionswerte besitzen, um dabei im Beispiel der VIP zu garantieren, dass das einmal angelegte Vakuum und damit die Funktionsfähigkeit der VIP über einen sehr langen Zeitraum (10-15 Jahre) erhalten bleiben.

Übliche Sperrschichtfolien aus Kunststoffen, wie beispielsweise EP-A 0 517 026 beschreibt, erreichen nicht die erforderliche Gassperrwirkung. Verbunde die eine Aluminiumfolie enthalten, besitzen zwar eine totale Gassperre, aber sind in vielen Anwendungen bedingt durch die Wärmeleitfähigkeit des Aluminiums nicht erwünscht. Darüber hinaus sind metallisierte oder mit SiOx bedampfte Folien bekannt, die die Nachteile bezüglich der Wärmeleitfähigkeit der reinen Metallfolien umgehen (wie zum Beispiel in EP-A 0 878 298 beschrieben), gleichzeitig höhere Sperrwirkungen als reine Kunststofffolien erzielen, dabei aber ebenfalls weit von den geforderten Gassperrwerten entfernt sind.

Unter Vakuumisolationspaneelen (VIP) versteht man dabei plattenförmige Gebinde, die aus einem Dämm- oder Füllstoff bestehen und von einer Hochbarrierefolie vakuumverpackt umhüllt sind. Die Art und insbesondere die Höhe des Vakuums sind dabei von dem verwendeten Dämm- oder Füllstoff und der verlangten Isolationswirkung des VIP abhängig. Die Hochbarnerefolie verhindert dabei über die Lebensdauer des VIP die Diffusion von Gasen, die das Vakuum und damit die Isolationswerte des VIP verschlechtern. Metallfolien sind dabei als Hochbarnerefolien unerwünscht, da diese über die Kanten des plattenförmigen VIP Wärme leiten und damit die Isolationsleistung verringern.

Aufgabe der vorliegenden Erfindung war es daher, Folienlaminate bereitzustellen, die eine besonders hohe Gassperrwirkung erzielen, ohne dabei wärmeleitende Metallfolien als Komponenten einzusetzen. Dabei sollten gleichzeitig durch geeignete Kombination von Materialien weitere mechanische und thermische Eigenschaften des Folienlaminats positiv beeinflusst werden. Insbesondere sollen Folienlaminate zur Verfügung gestellt werden, die zur Herstellung von Vakuumisolationspaneelen (VIP) geeignet sind.

Erfindungsgemäß gelingt dies durch ein mehrschichtiges Folienlaminat mit mindestens 3 Schichten mit folgender Schichtenfolge:
(Ia) Mit Aluminium oder SiOx oder einem Metalloxid der 2. oder 3. Hauptgruppe bedampfte Folienschicht.
(Ib) Mit Aluminium oder SiOx oder einem Metalloxid der 2. oder 3. Hauptgruppe bedampfte Folienschicht.
(II) Heißsiegelschicht als Siegelmedium

Hierbei würde man zunächst erwarten, dass die Gassperrwirkung durch die Gassperrwirkung der besten der Einzelfolien gegeben ist, bzw. sich aus der Summation der Sperrwirkungen der Einzelfolien errechnet, jedoch erhält man überraschenderweise Gassperrwirkungen, die nicht nur deutlich höher als die der Einzelfolien liegen, sondern sogar teils deutlich höher als die der Summe der Einzelfolien liegen. Dies kann zum Beispiel durch eine synergistische Fehlerabdeckungen der einzelnen metallisierten Schichten erklärt werden.

Um noch weiter gesteigerte Gasdiffusionssperrwerte zu erhalten können zwischen die Schichten (Ia) und (Ib) oder (Ib) und (II) noch weitere Schichten eingefügt werden, die ebenfalls mit Aluminium oder SiOx oder einem Metalloxid der 2. oder 3. Hauptgruppe bedampftes Material enthalten oder aber nicht bedampfte Schichten mit speziellen Barriereeigenschaften (z.B. PVOH).

Die mit Aluminium oder SiOx oder einem Metalloxid der 2. oder 3. Hauptgruppe bedampften Schichten können dabei aus allen üblichen Kunststoffen bestehen, insbesondere aber auch aus Polyestern, Polyamiden, Polyolefinen oder deren Copolymeren. Weiterhin können diese Schichten auch aus coextrudierten Lagen unterschiedlicher Polymere bestehen. Die Dicke der einzelnen Schichten ist dabei nicht wesentlich, wird aber zu einem kleinen Anteil die Gassperrwirkung beeinflussen, zum anderen die mechnischen und thermischen Eigenschaften des Folienlaminats mitbestimmen.

Mit diesen erfindungsgemäßen Folienlaminaten lassen sich insbesondere Sauerstoffdiffüsionswerte kleiner 0,01 cm³/m² d bar (23°C, 75% r.h.) und Wasserdampf diffusionswerte kleiner 0,1 g/m² d (38°C, 90% r.h.) erreichen. Dabei sind mit Laminaten mit mehr als 3 Schichten durchaus auch Folienlaminate zu erhalten, die diese Werte noch deutlich unterschreiten. Durch die Kombination der unterschiedlichen Lagen lassen sich dabei nicht nur die Gasdiffusionswerte auf die von der Anwendung erforderlichen Werte einstellen, darüber hinaus ist es möglich durch Modifikation des Schichtmaterials das mit Aluminium oder SiOx oder einem Metalloxid der 2. oder 3. Hauptgruppe bedampft ist, die mechanischen und/oder thermischen Kennwerte des resultierenden erfindungsgemäßen Laminats zu variieren.

Wird als außenliegende Schicht (Ia) ein mit Aluminium oder SiOx oder einem Metalloxid der 2. oder 3. Hauptgruppe bedampftes Polyamid gewählt, zeichnet sich das entstehende Folienlaminat zusätzlich zu den guten Gasdissusionssperrwerten durch eine hohe mechanische Stabilität, insbesondere durch eine hohe Durchstichfestigkeit aus, die in der Handhabung der erfindungsgemäßen Folienlaminate Vorteile bietet und damit Beschädigungen der Laminate und daraus hergestellter VIP verhindert. Solche VIP müssen sowohl bei der Herstellung als auch beim Einbau in die Endapplikation teilweise große mechanische Belastungen aushalten, die zu einer Beschädigung der Folie und damit der Barnereeigenschaften führen können.

In einem speziellen Fall wird als außenliegende Schicht (Ia) ein mit Aluminium oder SiOx oder einem Metalloxid der 2. oder 3. Hauptgruppe bedampftes Polypropylen gewählt, das sich durch eine besonders gute Wasserdampfsperre auszeichnet. Wird diese außenliegende Schicht nun mit einer Folgeschicht (Ib) kombiniert die aus einem mit Aluminium oder SiOx oder einem Metalloxid der 2. oder 3. Hauptgruppe bedampften Polyester besteht, der sich seinerseits durch eine besonders gute Sauerstoffsperre auszeichnet, wird das daraus gebildete erfindungsgemäße Folienlaminat sich sowohl durch eine bessere Wasserdampfsperre im Vergleich zur einzelnen Polypropylenschicht, als auch durch eine bessere Sauerstoffsperre im Vergleich zur einzelnen Polyesterschicht auszeichnen, womit beide entscheidenden Barriereelemente in besonders überzeugender Weise sich nicht nur ergänzen sondern synergistisch verstärken.

In einem weiteren speziellen Fall ist eine oder mehrere der mit Aluminium oder SiOx oder einem Metalloxid der 2. oder 3. Hauptgruppe bedampften Schichten eine coextrudierte Schicht, in der diese coextrudierte Schicht aus mindestens einer Lage Polyamid (a) und mindestens einer Gasbarrierelage (b) aufgebaut ist. Insbesondere anzustreben ist eine 3-lagige Kombination aus Polyamid in den Außenlagen und EVOH als Gasbarriereschicht in der Innenlage. Die Gasbarrierelage sorgt dabei im resultierenden erfindungsgemäßen Folienlaminat für extrem verbesserte Gassperrwerte, bei der Verwendung von EVOH als Gassperrlage insbesondere zu verbesserten Sauerstoffsperrwerten.

Besonders bevorzugt ist eine Anordnung des Folienlaminats, in dem jeweils 2 der mit Aluminium oder SiOx oder einem Metalloxid der 2. oder 3. Hauptgruppe bedampften Schichten mit den bedampften Seiten gegeneinander laminiert sind. Dies ergibt besonders vorteilhafte Gassperrwerte, da sich hierbei die beiden Metallisierungsschichten direkt ergänzen, sodass mikroskopische Beschädigungen der einen Metallisierung durch die zweite Metallisierung verdeckt werden können, was zu einer überproportionalen Steigerung der Barriereeigenschaften führt.

In einem besonders bevorzugten Aufbau sind eine oder mehrere der Schichten (Ia,Ib,Ic,...) mit Aluminium, vorzugsweise in einer Dicke von 30 bis 80 nm, bedampft.

Als Heißsiegelschicht (II) können Polyolefin Homo- oder Polyolefin Copolymere eingesetzt werden. Bevorzugt sind Linear Low Density Polyethylen (LLDPE), Polybutylen (PB), Ethylenvinylacetat (EVA), Polypropylen (PP), High Density Polyethylen (HDPE), Ionomer (10) und Mischungen dieser Stoffe, weiterhin denkbar ist amorphes Polyethylenterephthalat (aPET) oder andere siegelfähige Polymermaterialien. Erfindungsgemäß möglich ist auch eine mehrschichtige, durch Coextrusion mehrerer Schichten aus den genannten Materialien hergestellte Ausführungsfom der Heißsiegelschicht (II). Die Dicke der Heißsiegelschicht (II) beträgt vorzugsweise 20 bis 200µm, besonders bevorzugt 50 bis 100µm.

Insbesondere kommen bei der Produktion von VIP Ionomersiegelschichten oder andere leichtfließende Siegelschichten zum Einsatz, die unter den typischen staubigen Produktionsbedingungen bei der VIP Herstellung zu besonders gasdichten Siegelnähten führen.

Als Klebe- und Verbindungsschicht zwischen den einzelnen Schichten kommen vorzugsweise handelsübliche Reaktivklebstoffe wie insbesondere Zwei-Komponenten-Polyurethanklebstoffe zum Einsatz. Es können aber auch polyolefinische Haftvermittler, vorzugsweise Polyethylen-Homopolymer, Ethylenethylacrylat (EEA) oder Ethylenmethacrylsäure (EMA) eingesetzt werden. Jedoch ist das erfindungsgemäße Folienlaminat und insbesondere seine Gassperrwirkung nicht wesentlich von der Art der Verbindung der einzelnen Schichten abhängig.

Hierbei ist insbesondere bei den Zwei-Komponenten-Polyurethanklebstoffen darauf zu achten, dass die Komponentenzusammensetzung so gewählt wird, dass eine möglichst geringe Gasbildung stattfindet. Ansonsten kann dies zur Bildung von Gasblasen in den Verbindungsschichten führen.

Ein weiterer Gegenstand der Erfindung ist die Verwendung der erfindungsgemäßen Folienlaminate in Vakuumisolierpaneelen.

Im Folgenden sind beispielhafte Folienaufbauten wiedergegeben, die die erfindungsgemäßen Folienlaminate näher beschreiben sollen. Diese Beispiele sind jedoch nicht vollständig und sollen die erfindungsgemäßen Folienlaminate nicht einschränken.

### Beispiele

A)
   (Ia) mit Aluminium bedampftes Polyamid, bedampfte Seite zu (Ib) gewandt
   (Ib) mit Aluminium bedampfter Polyester, bedampfte Seite zu (II) gewandt
   (II) Polyethylen-Siegelschicht
B)
   (Ia) mit Aluminium bedampfter Polyester, bedampfte Seite zu (Ib) gewandt
   (Ib) mit Aluminium bedampfter Polyester, bedampfte Seite zu (Ia) gewandt
   (II) Polyethylen-Siegelschicht
C)
   (Ia) mit Aluminium bedampftes Polypropylen, bedampfte Seite zu (Ib) gewandt
   (Ib) mit Aluminium bedampfter Polyester, bedampfte Seite zu (II) gewandt
   (II) Polyethylen-Siegelschicht
D)
   (Ia) mit Aluminium bedampftes Polyamid, bedampfte Seite zu (Ib) gewandt
   (Ib) mit Aluminium bedampftes Polypropylen, bedampfte Seite zu (Ia) gewandt
   (II) Ionomer-Siegelschicht
E)
   (Ia) mit Aluminium bedampftes Coextrudat aus Polyamid/EVOH/Polyamid, bedampfte Seite zu (Ib)
   (Ib) mit Aluminium bedampfter Polyester, bedampfte Seite zu (Ic) gewandt
   (Ic) mit Aluminium bedampfter Polyester, bedampfte Seite zu (Ib) gewandt
   (II) amorphe Polyethylenterephthalat-Siegelschicht
F)
   (Ia) mit Aluminium bedampftes Polyamid, bedampfte Seite zu (Ib) gewandt
   (Ib) mit Aluminium bedampfter Polyester, bedampfte Seite zu (Ia) gewandt
   (Ic) mit Aluminium bedampfter Polyester, bedampfte Seite zu (Id) gewandt
   (Id) mit Aluminium bedampfter Polyester, bedampfte Seite zu (Ic) gewandt
   (II) Polypropylen-Siegelschicht
G)
   (Ia) mit SiOx bedampftes Polyamid, bedampfte Seite zu (Ib) gewandt
   (Ib) mit SiOx bedampfter Polyester, bedampfte Seite zu (II) gewandt
   (II) Ionomer-Siegelschicht
H)
   (Ia) mit SiOx bedampftes Polypropylen, bedampfte Seite zu (Ib) gewandt
   (Ib) mit Aluminium bedampfter Polyester, bedampfte Seite zu (Ia) gewandt
   (II) Polyethylen-Siegelschicht

## Patentansprüche

1. Mehrschichtiges Folienlaminat umfassend mindestens zwei oder mehrere mit Aluminium oder SiOx oder einem Metalloxid der 2. und 3. Hauptgruppe dedampfte Schichten und eine Polyolefin-Heißsiegelschicht (II).

2. Mehrschichtiges Folienlaminat nach Anspruch 1, wobei das Folienlaminat insgesamt 3 Schichten umfasst, davon zwei mit Aluminium oder SiOx oder einem Metalloxid der 2. und 3. Hauptgruppe bedampfte Schichten (Ia, Ib) und eine Polyolefin-Heißsiegelschicht (II).

3. Mehrschichtiges Folienlaminat nach Anspruch 1 oder 2, wobei die außen liegende Schicht (Ia) ein mit Aluminium der SiOx oder einem Metalloxid der 2. und 3. Hauptgruppe bedampftes Polypropylen ist.

4. Mehrschichtiges Folienlaminat nach Anspruch 1 oder 2, wobei die außen liegende Schicht (Ia) ein mit Aluminium oder SiOx oder einem Metalloxid der 2. und 3. Hauptgruppe bedampftes Polypropylen ist.

5. Mehrschichtiges Folienlaminat nach Anspruch 1, wobei mindestens eine der Schichten eine mit Aluminium oder SiOx oder einem Metalloxid der 2. oder 3. Hauptgruppe bedampfte coextrudiert Schicht ist, in der diese coextrudierte Schicht aus mindestens einer Lage Polyamid (a) und mindestens einer Gasbarrierelage (b) aufgebaut ist.

6. Mehrschichtiges Folienlaminat nach Anspruch 1 bis 5, **dadurch gekennzeichnet, dass** jeweils zwei der mit Aluminium oder SiOx oder einem Metalloxid der 2. und 3. Hauptgruppe bedampften Schichten (I) mit den bedampften Seiten gegeneinander laminiert sind.

7. Mehrschichtiges Folienlaminat nach einem der vorhergehenden Ansprüche, wobei die einzelnen Schichten mittels Zwei-Komponenten-Polyurethanklebestoffen laminiert werden, wobei insbesondere das Verhältnis der Klebstoffkomponenten so gewählt wird, dass bei der Klebstoffaushärtung die entstehenden Gasmengen minimiert werden.

8. Mehrschichtige Folienlaminat nach einem der vorhergehenden Ansprüche, wobei es sich bei den bedampften Schichten um Schichten handelt, die mit Aluminium, vorzugsweise in einer Dicke von 30 bis 80 nm, bedampfte sind.

9. Mehrschichtiges Folienlaminat nach einem der vorhergenden Ansprüche, wobei die Außenlagen (Ia) bedruckt ist.

10. Verwendung des mehrschichtigen Folienlaminats nach einem der vorhergehenden Ansprüche als Hochbarrierefolie in Vakuumisolationspaneelen.
